# EUROPEAN PATENT APPLICATION

(11) **EP 4 528 638 A1**
(43) Date of publication of application: **26.03.2025**
(21) Application number: 24200424.0
(22) Date of filing: 13.09.2024
(51) Int. Cl.: G06T 7/00

(54) **INSPECTION SYSTEMS AND METHODS FOR DAMAGE MEASUREMENT**

(30) Priority: 25.09.2023 US 202318372592
(71) Applicant: General Electric Company, Evendale, Ohio 45215 (US); Oliver Crispin Robotics Limited, Altrincham, Cheshire WA14 2DT (GB)
(72) Inventor: DIXON, Walter, Niskayuna, 12309 (US); MILLER, James Vradenburg, Niskayuna, 12309 (US); GRAHAM, Andrew Crispin, Altrincham, WA14 2DT (GB); ERIKSEN, Michael Edward, Evendale, 45215 (US)
(74) Representative: Openshaw & Co.

(57) **Abstract**

A system may include a sensor (235) configured to capture data from a part of an engine (10). The system is configured to form a three-dimensional (3D) surface model of the part of the engine (10) based on signals received from the sensor (235) system (230), determine a nonplanar reference surface (430) based on the 3D surface model of the part, and measure a characteristic of a damaged portion of the part of the engine (10) based on the 3D surface model and the nonplanar reference surface (430).

## Description

### FIELD OF THE DISCLOSURE

The present subject matter relates generally to an imaging tool, and specifically to a three-dimensional (3D) imaging tool for inspection.

### BACKGROUND

Complex devices such as jet engines can develop damage from general use that can lead to performance degradation and failure. Wear and tear can occur at various locations of the devices including interior areas that are difficult to access without disassembling the device. Insertion imaging systems such as borescopes can be inserted through inspection ports to perform inspections of the interior of a jet engine. Conventionally, measurements of abnormalities are taken based on manually selected reference points in the captured images.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a cross-sectional schematic view of a high-bypass turbofan jet engine in accordance with some embodiments of the present disclosure.
FIG. 2 is a block diagram of an inspection system in accordance with some embodiments of the present disclosure;
FIG. 3 is a flow diagram of a method in accordance with some embodiments of the present disclosure; and
FIG. 4A, 4B, 4C, and 4D are illustrations of a reference surface estimation process in accordance with some embodiments of the present disclosure.

### DETAILED DESCRIPTION

Reference now will be made in detail to embodiments of the present disclosure, one or more examples of which are illustrated in the drawings. Each example is provided by way of explanation of the present disclosure, not limitation of the disclosure. In fact, it will be apparent to those skilled in the art that various modifications and variations can be made in the present disclosure without departing from the scope or spirit of the disclosure. For instance, features illustrated or described as part of one embodiment can be used with another embodiment to yield a still further embodiment. Thus, it is intended that the present disclosure covers such modifications and variations as come within the scope of the appended claims and their equivalents.

As used herein, the terms "first," "second," "third," etc. may be used interchangeably to distinguish one component from another and are not intended to signify location or importance of the individual components.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a," "an," and "the" include plural referents unless the context clearly dictates otherwise.

Approximating language, as used herein throughout the specification and claims, may be applied to modify any quantitative representation that could permissibly vary without resulting in a change in the basic function to which it is related. Accordingly, a value modified by a term or terms, such as "about," "approximately," "almost," and "substantially" are not to be limited to the precise value specified. In some instances, the approximating language may correspond to the precision of an instrument for measuring the value. For example, the approximating language may refer to being within a 1, 2, 4, 10, 15, or 20 percent margin. These approximating margins may apply to a single value, either or both endpoints defining numerical ranges, and/or the margin for ranges between endpoints. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Techniques for engine inspection can include a variety of profilometry technologies (e.g., structured light, depth from focus or phase, time of flight, LiDAR, etc.). These techniques are used to detect and/or measure defects or damage to a part, such as a portion of a fan blade, vane, casing, etc. Defects or damage can include a crack, a dent, a tear, an abrasion, an erosion, a bend, a creep, a thermal fatigue, a spallation, a nick, a gas corrosion, an oxidation, a fretting, a pitting, etc.

.... Measurement of a damage, including wear, tear, and defects, identified during an inspection can be based on estimating where the undamaged surface would have been. The operator may manually establish reference points in a three-dimensional (3D) image to estimate the undamaged surface and make defect measurements. For example, an operator may manually select three points to create a planar/flat reference surface over a damaged area. However, the conventional process requires skilled operators who can select suitable reference points. A planar reference surface also does not provide an accurate measurement for damages on a curved surface. As such, the measurements can differ between inspections and between operators due to the variability of human interpretation. The variability of the conventional process drives more conservative limits to allow for sufficient safety margins in view of the potentially higher measurement error.

In some embodiments, the systems and methods described herein reduce the maintenance burden and lessen the operator skill required to make accurate and repeatable measurements of defects for part disposition and assessment against serviceable limits that are independent of operator interpretation. In some embodiments, an undamaged surface topography is reconstructed as a nonplanar reference surface based on automated surface approximation methods, such as CAD geometry, interpolation or extrapolation of a surface using the surrounding undamaged regions, utilizing adjacent part surfaces as references, utilizing "as-built" or previously measured surfaces topographies from the part under inspection, and/or utilizing similar part topographies. In some embodiments, based on the type and location of the defect, a standardized set of rules may be utilized to determine the standardized measurement technique to establish a repeatable measurement of the defect that is independent of operator interpretation using nonplanar reference surface estimation. Once the reference surface is reconstructed, measurements that involve the characterization of the defect at its maximum or minimum extent, statistically quantified topography, or volumetric constraints can be accomplished through enumeration or algorithmically optimized set calculations using the measured surface topography and the reconstructed estimate of the undamaged surface. Additionally, knowledge of the part, sensor characteristics, measured topography variation, and surface estimation technique may be used to establish error bounds on the computed measurements.

In some embodiments, the technique described herein may be applicable to devices, such as engine product lines, that have service maintenance requirements involving visual inspection and evaluation of defect measurements against serviceable limits.

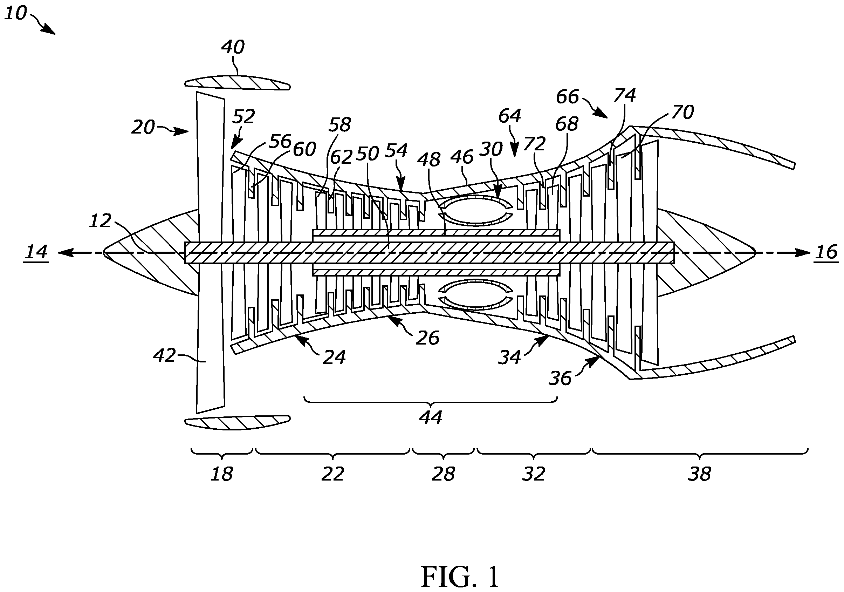

Referring now to the drawings, wherein identical numerals indicate the same elements throughout the figures. FIG. 1 is a schematic cross-sectional diagram of a conventional gas turbine engine 10 for an aircraft in which an imaging and inspection system described herein can operate. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34 and a LP turbine 36, and an exhaust section 38.

The fan section 18 includes a fan casing 40 surrounding the fan 20. The fan 20 includes a plurality of fan blades 42 disposed radially about the centerline 12.

The HP compressor 26, the combustor 30, and the HP turbine 34 form a core 44 of the engine 10 which generates combustion gases. The core 44 is surrounded by core casing 46 which can be coupled with the fan casing 40.

A HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 can be provided in a ring and extend radially outwardly relative to the centerline 12, from a blade platform to a blade tip, while the corresponding static compressor vanes 60, 62 are positioned downstream of and adjacent to the rotating blades 56, 58. It is noted that the number of blades, vanes, and compressor stages shown in FIG. 1 were selected for illustrative purposes only, and that other numbers are possible.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and extend radially outwardly relative to the centerline 12, from a blade platform to a blade tip, while the corresponding static turbine vanes 72, 74 are positioned upstream of and adjacent to the rotating blades 68, 70. It is noted that the number of blades, vanes, and turbine stages shown in FIG. 1 were selected for illustrative purposes only, and that other numbers are possible.

In operation, the rotating fan 20 supplies ambient air to the LP compressor 24, which then supplies pressurized ambient air to the HP compressor 26, which further pressurizes the ambient air. The pressurized air from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

It will be appreciated that the engine 10 may further define a plurality of openings allowing for inspection of various components within the engine 10. For example, the engine 10 may define a plurality of insertion tool openings at various axial positions within the compressor section, combustion section 28, and turbine section 32. Additionally, the engine 10 may include one or more igniter ports within, e.g., the combustion section 28 of the engine 10, that may allow for inspection of the combustion section 28.

It should further be appreciated that the exemplary engine 10 depicted in FIG. 1 is by way of example only, and that in other exemplary embodiments, the engine 10 may have any other suitable configuration, including, for example, any other suitable number of shafts or spools, turbines, compressors, etc. Additionally, or alternatively, in other exemplary embodiments, any other suitable turbine engine may be inspected with the systems and methods described herein. For example, in other exemplary embodiments, the engine may not be a turbofan engine, and instead may be configured as a turboshaft engine, a turboprop engine, turbojet engine, etc., or may be an industrial gas turbine engine for electricity generation, fluid pumping, etc. In some embodiments, the systems and methods described herein may be used for the inspection of other aircraft or vehicle components. An engine 10 may be an example of a device referred to herein. In some embodiments, the systems and methods described herein may be used in the inspection of any type of devices suspectable to external or internal surface damages such as cracks, dents, scratches, corrosions, abrasions, oxidations, etc.

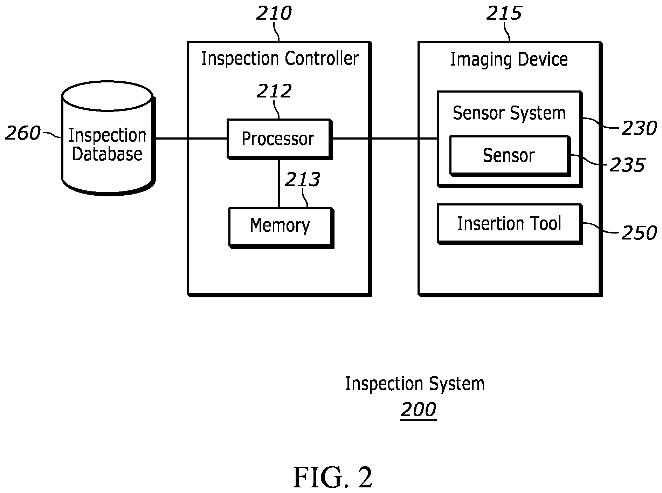

Referring now to FIG. 2, an inspection system 200 is shown. The inspection system 200 includes an inspection controller 210, an imaging device 215, and an inspection database 260. The imaging device 215 includes a sensor system 230 and in some embodiments, an insertion tool 250.

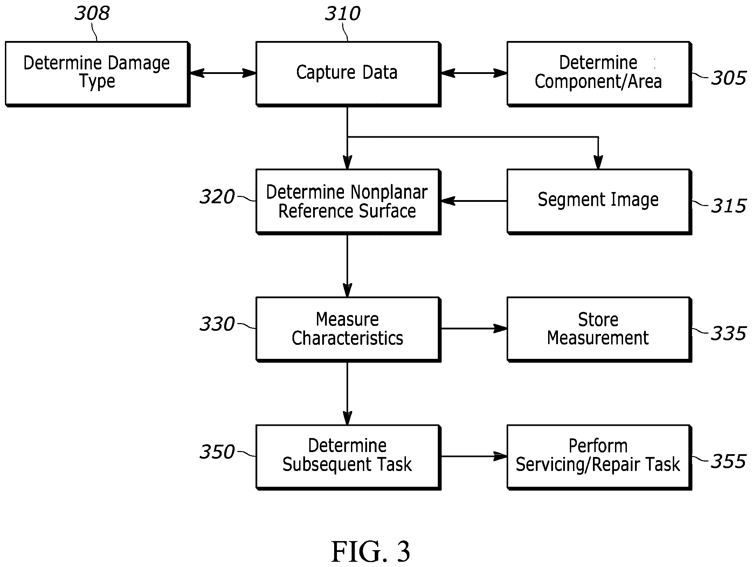

The inspection controller 210 includes a processor 212 coupled to a computer-readable storage memory 213. In some embodiments, the inspection controller 210 may further include a data and/or network interface device for communicating with the imaging device 215 and/or one or more databases and services for image processing and data storage as discussed herein. In some embodiments, the inspection controller 210 may include one or more of a control circuit, a microprocessor, a central processing unit (CPU), a graphics processing unit (GPU), an application-specific integrated circuit (ASIC), and the like and may be configured to execute computer-readable instructions stored on the computer-readable storage memory 213. The computer-readable storage memory 213 may include volatile and/or non-volatile memory and have stored upon it, computer-readable codes which, when executed by the processor, cause the inspection controller 210 to receive and process the data received from the sensor system 230 for damage characteristics measurement based on nonplanar reference surface determination. In some embodiments, the processor 212 may further be configured to control the capture parameters/configurations (e.g., sensor selection, image resolution, focal length, sweep speed, cycle time, etc.). In some embodiments, the inspection controller 210 may further be configured to control the motion of one or more automated or semi-automated insertion tools 250 of the imaging device 215, such as a snake arm robot or robotic arm. In some embodiments, the inspection controller 210 is configured to perform one or more steps described with reference to FIG. 3 herein. The inspection controller 210 may be local or remote from the engine being inspected and communicate with the imaging device via a wired connection, a wireless local area network connection, and/or over a wide area network. In some embodiments, the inspection controller 210 may communicate with the imaging devices 215 in one or more inspection spaces for the inspection of one or more devices such as aircraft components. In some embodiments, the inspection controller 210 may be implemented on a plurality of geographically distributed devices such as a handheld device local to the device being inspected and a remote or cloud-based server.

The sensor system 230 may include one or more sensors 235 configured to capture 3D data. In some embodiments, the sensor 235 is configured to capture depth images or data that may be processed by the inspection controller 210 to generate a depth image such as a 3D point cloud. In some embodiments, data captured by the sensors 235 may be used to form point clouds, depth maps, and/or stereo maps that can be converted to a 3D surface model. In some embodiments, the sensor 235 may include a 2D optical sensor, stereo-optical sensor, a structured light projection scanner, a laser scanner, a touch probe, an Eddy current imager, a scanning electron microscope (SEM), and/or an ultrasound imager. In some embodiments, depth data may be determined based on 2D images using shape from shading, shaping from motion, or other 3D estimation techniques. In some embodiments, the sensor system 230 may include sensors of different types.

The insertion tool 250 generally refers to a tool configured to insert one or more sensors of the sensor system 230 into a confined or narrow space to perform inspections. In some embodiments, the insertion tool 250 may be a borescope tool configured to be inserted through a port on the casing of an assembled engine to capture images of the interior of the engine, such as the engine 10. In some embodiments, the insertion tool 250 may include a flexible insertion tool, a rigidizable insertion tool, a robotic arm, or a snake arm robot. In some embodiments, the insertion tool 250 may be a manually operated tool, a semi-automated tool, or an automated tool. In some embodiments, the insertion tool 250 may be configured to position a sensor at a predefined location and orientation within the engine interior upon insertion. In some embodiments, the insertion tool 250 may include one or more channels for routing wires for transmitting signals between the inspection controller 210 and the sensor system 230. In some embodiments, the imaging device 215 may include an insertion tool 250 configured to be interchangeably coupled with a number of different types of sensors, an insertion tool 250 coupled to a plurality of sensors of different types, or a plurality of insertion tools 250 each coupled to one or more types of sensors of the sensor system 230.

The inspection database 260 includes one or more computer readable memory storage devices. The inspection database 260 is generally configured to store inspection data generated by the inspection controller 210 based on communications with the imaging device 215. In some embodiments, the inspection database 260 may device inspection histories for any number of devices. In some embodiments, the inspection database 260 may further store reference data from manufacturers and third parties such as maintenance requirements, service manuals, serviceability metrics, etc. In some embodiments, the inspection database 260 may further store inspection rules for different devices, components, parts, and/or damage types. In some embodiments, the inspection rules may specify inspection configurations such as sensor selection, capture parameters, reference surface reconstruction rules, and characteristics measurement rules. For example, different inspection rules may be defined for LE abrasion on a LP compressor airfoil, LE crack on a LP compressor airfoil, TE crack on a LP compressor airfoil, LE abrasion on a HP compression airfoil, dent on LP compressor casing, etc. In some embodiments, the inspection rules may further specify tolerances for part disposition (e.g., no action, repair, replace, etc.). For example, the inspection rule may specify the depths that trigger a repair task or a replacement task for a LE abrasion on a LP compression airfoil. In some embodiments, the data in the inspection database 260 may be implemented as one or more database structures. In some embodiments, the inspection database 260 may be implemented on one or more physical devices such as a local storage memory, a server storage memory, a cloud-based storage memory. In some embodiments, the inspection database 260 may be implemented at least partially on the computer-readable storage memory 213 of the inspection controller 210. In some embodiments, the inspection controller 210 may access the inspection database 260 through a network such as the Internet.

Next referring to FIG. 3, a method for performing inspection is shown. In some embodiments, one or more steps of FIG. 3 may be performed with the inspection system 200 described with reference to FIG. 2.

In some embodiments, prior to step 310, an insertion tool, such as the insertion tool 250, is inserted into a confined space such as an engine interior cavity (e.g., the combustion section 28). In some embodiments, the insertion tool may be manually operated, semi-automated, or automated. In some embodiments, the insertion tool may include a rigidizable tool that is inserted and rigidized to position the sensor 235 of the imaging device 215 at a predefined location and/or orientation. In some embodiments, the insertion tool 250 may be mechanically driven by signals from a controller into position.

In step 305, the inspection system 200 determines a device component or device area associated with the data captured in step 310. In some embodiments, the device component or the device area is identified based on a capture location of the sensor 235, machine vision feature recognition, artificial intelligence image recognition, and/or a computer model of the device. In some embodiments, the device component or the device area is identified based on a sensor different from the sensor 235. For example, the sensor system 230 may include a camera for capturing 2D colored images and a 3D camera for capturing 3D data. The device component or device area may be determined based on the image captured by the 2D camera prior to the 3D scan being initiated. In some embodiments, the device component or device area may be determined based on the insertion location of the insertion tool and/or the sensor of the imaging device. In some embodiments, the device component or device area may be received as an operator input. For example, a user interface may be provided for the operator to select from among a plurality of parts or areas. In some embodiments, the device area includes a zone of a component, wherein the zone includes a leading edge, a trailing edge, a tip, a root fillet, a platform, a suction side, a pressure side, or a component area identifier. In some embodiments, step 305 may occur after step 310 and be based on the data captured in step 310.

In step 308, the inspection system 200 may further identify a damage type. In some embodiments, the damage type may be identified based on sensor data captured from the part, device maintenance history, device usage history, or operator input. In some embodiments, the damage type may be determined based on a color image, a hyperspectral image, a thermal image, a radiology image, and/or a device history. For example, a machine learning computer vision algorithm may be used to identify the damage type based on a 2D or 3D image. In some embodiments, the damage type may be inputted by an operator through a user interface provided on the inspection system 200. In some embodiments, the damage type includes a crack, a dent, an abrasion, an erosion, a bend, a creep, a thermal fatigue, a spallation, a nick, a gas corrosion, an oxidation, a fretting, and/or a pitting. In some embodiments, the damage type may be determined based on the data captured in 310 or by a different sensor.

In some embodiments, the damage type determined in step 308 and/or the device component/area determined in step 305 may be used to determine and configure the parameters for data capture in step 310, select the reconstruction method and/or parameters in step 320, and/or set the characteristics measurement rules in step 330. In some embodiments, the inspection system 200 is configured to select a sensor 235 from among different types of sensors of the sensor system 230 to capture data from the part based on the device area/component and/or damage type. In some embodiments, the inspection system 200 is configured to determine the capture parameters of the sensor 235 based on the device area/component and/or damage type. For example, the capture resolution or focal length of the sensor may be set based on the part (e.g., engine LP compressor blades, inlet channel, etc.) being inspected and/or the damage type. In some embodiments, the damage type determined in step 308 and/or the device component/area determined in step 305 may further be used to determine the subsequent tasks in step 350. For example, the disposition thresholds and/or the methods of repair may be determined based on damage type and/or location. In some embodiments, the damage type determined in step 308 and/or the device component/area determined in step 305 may be used to select from among the inspection rules stored in the inspection database 260.

In step 310, a sensor of the sensor system 200 captures data from a part being inspected to form a 3D surface model of the surface. In some embodiments, the data may be captured by a stereo-optical sensor, a structured light projection scanner, a laser scanner, a touch probe, an Eddy current imager, a scanning electron microscope (SEM), or an ultrasound imager. In some embodiments, the data may include data captured by multiple sensors and combined into a 3D surface model. In some embodiments, the data may be captured while the part is rotating. For example, the part being inspected may be on a rotating airfoil of an engine. In some embodiments, the sensor may be configured to generate a 3D point cloud. In some embodiments, the processor 212 of the inspection system 200 may be configured to process the captured data (e.g., stereo 2D images) to form the 3D surface model.

In step 320, the inspection controller 210 of the inspection system 200 determines a nonplanar reference surface based on the 3D surface model formed in step 310. In some embodiments, the nonplanar reference surface corresponds to an estimation of an undamaged surface and/or the original condition of the part. In some embodiments, the nonplanar reference surface may be determined based on segmenting a damaged area from an undamaged area on the part of the device in step 315. In some embodiments, the damaged area is segmented based on the 3D surface model and/or another image captured by a different sensor of the sensor system 230. In some embodiments, the damaged area is segmented based on an image-based computer vision identification algorithm. In some embodiments, the damaged area is segmented by classifying a minimum radius of curvature limit for an undamaged surface and identifying an area with surfacing exceeding the minimum radius of curvature limits as the damaged area. In some embodiments, the damaged area is identified based on comparing color, reflectiveness, surface texture, thermal properties, or electrical properties of areas of the part. In some embodiments, the damaged area is identified based on comparing the 3D surface model with a computer-aided design (CAD) model of the part or a previously captured surface model of the part. In some embodiments, the damaged area may be segmented based at least partially on an operator input/selection in an image of the part.

In some embodiments, in step 320, the nonplanar reference surface is determined based on performing polynomial interpolation, spline interpolation, bilinear interpolation, and/or bicubic interpolation over the 3D surface model. In some embodiments, the nonplanar reference surface is determined based on applying a series of interpolation methods to the 3D surface model until a fit threshold is met. In some embodiments, the fit of the reference surface may be determined based on an error or outlier detection algorithm such as the mean square error estimation, R-square fit analysis, regression analysis, L1 or L2 principal component analysis, random sample consensus (RANSAC) analysis, least median squire analysis, and the like. In some embodiments, the nonplanar reference surface is determined based on fitting the 3D surface model to a plurality of candidate geometries associated with a device component or a device area associated with the part. In some embodiments, the 3D surface model may be selected based on Minimum Description Length, Akaike Information Criterion, Bayesian Information Criterion, and the like. In some embodiments, the nonplanar reference surface is determined based on fitting an idealized surface model over the undamaged area to interpolate the nonplanar reference surface over the damaged area. In some embodiments, the undamaged area segmented in step 315 may serve as reference data points for the interpolations.

In some embodiments, the nonplanar reference surface is determined based on an objective function used to determine a sampled average surface estimation of an undamaged part from a plurality of similar parts. In some embodiments, the part of the device being inspected includes a portion of an airfoil and the plurality of similar parts includes other airfoils of the device, wherein the surface estimation is based on data from the plurality of similar parts captured with the sensor at a same location. In some embodiments, the measurement data from the plurality of similar parts and the data from the sensor are captured while a component on which the airfoils are mounted is rotating. In some embodiments, the airfoils may be rotating blades and /or stator vanes. In some embodiments, similar parts may be surface sections of a rotating component such as a shaft or a blade. In some embodiments, the part the device inspected may generally a rotating (e.g., rotating blades) or a stationary (e.g., nozzle and vanes) part of a device.

In some embodiments, the method of nonplanar reference surface reconstruction may be selected from a plurality of above-described methods based on the component/area determined in step 305 and/or the damage type determined in step 308. In some embodiments, the parameters of methods (e.g., interpolation parameters/factors) may be selected based on the component/area and/or damage type.

In step 330, the inspection controller 210 of the inspection system 200 measures a characteristic of the damage based on the 3D surface model determined in step 330 and the nonplanar reference surface determined in step 320. In some embodiments, the characteristics may be measured based on the difference between the damaged area of the 3D surface model and the nonplanar reference surface. In some embodiments, the characteristics of the damaged portion include a defect depth, a defect size, a defect sharpness, a defect aspect ratio, a defect orientation relative to a component, a damaged portion volume, and/or a spatial relationship to another damaged area. In some embodiments, the depth of defect may be measured based on a distance from the reference surface to the damaged surface, along the reference surface normal. In some embodiments, the depth of the defect may be measured based on measuring the minimum distance from all points on the damaged surface of the 3D surface model to any point of the reference/undamaged surface. In some embodiments, the depth of the defect may be measured based on determining the largest sphere that will fit between the reference surface and the measured damaged surface. In some embodiments, the defect size may be measured based on the length, width, and depth. In some embodiments, the defect size may be measured based on the total area, circumference, and/or connection to another feature (e.g., row x, row 6 of cooling holes). In some embodiments, defect sharpness may be based on deriving stress concentration factor (Kt) to determine high cycle fatigue (HCF) effects. In some embodiments, the defect orientation may be measured based on determining the major axis of the defect. In some embodiments, the measurement may be used to identify the damage type such as a crack, a dent, a tear, an abrasion, an erosion, a bend, a creep, a thermal fatigue, a spallation, a nick, a gas corrosion, an oxidation, a fretting, and/or a pitting. In some embodiments, the measured characteristics may be selected based on the damage type. In some embodiments, a crack may further be characterized by its connection to one or more features such as an edge of a component, one or more cooling holes, etc. In some embodiments, abrasion/erosion may further be characterized by the part, such as leading-edge, tip, and coatings. In some embodiments, a bend may further be characteristic by shape, such as tip curl or gross bends. In some embodiments, pitting may further be characterized by pit size, spacing, and density on or portion of a surface. In some embodiments, the linearity and the tortuosity of the damage may be characterized based on the nonplanar reference surface. In some embodiments, the characteristics of the damage measured in step 330 may be used to determined a part disposition and/or the subsequent task in step 350.

In some embodiments, step 330 may include receiving a user input or a predefined rule of the characteristics to measure and outputting a numerical measurement. In some embodiments, the measurement rules may be part of the inspection rule selected based on device component/area and/or damage type. In some embodiments, a user interface may be provided for an operator to select points on the 3D surface model and/or the nonplanar reference surface for measurement. In some embodiments, step 330 may include determining the on-device/component location of the damaged portion. In some embodiments, the location of the damaged portion includes a distance to a device feature, wherein the device feature includes a cooling hole, a root fillet, a tip, an airfoil leading edge, an airfoil trailing edge, a proportion of an airfoil chord, or a platform.

In step 335, the measured characteristics are stored in an inspection database 260 as part of the inspection record of the device. In some embodiments, the captured data, 3D surface model, and/or the nonplanar reference surface may also be stored as part of the record.

In some embodiments, multiple nonplanar reference surfaces may be determined for a part by repeating one or more of 310, 305, 320, and 315. For example, a part may include multiple damaged areas and/or damage types. Discrete and/or connected nonplanar reference surfaces may be determined for different portions of the part. For example, for an airfoil, a first nonplanar reference surface may be determined for a damage on the leading edge and a second nonplanar reference surface may be determined for a damage on the suction side near the tip.

In step 350, the system may further determine a subsequent task based on the measured characteristics in step 330. In some embodiments, the measured characteristic in step 330 may be used to determine the disposition (e.g., no action, serviceable, repairable, unserviceable, etc.) of the device or the component associated with the part. In some embodiments, the disposition may be determined based on comparing the measured characteristics with disposition thresholds associated with the device component/area and/or damage type. For example, the device or component may be categorized as confirming or nonconforming based on comparing the measured characteristics with damage type and device or component-specific limits. In some embodiments, the subsequent task may be a reinspection task. For example, the inspection system may select a new sensor and/or captured parameter based on the measured characteristics. In some embodiments, the damage type determined in step 308 may be preliminary, and a different damage type may be identified based on the measured characteristics in step 300. In such cases, a new set of inspection rules may be selected for the reinspection task based on the updated damage type. In some embodiments, the process may return to step 310 to perform the reinspection ask. In some embodiments, the subsequent task may be a servicing or repair task such as performing a cleaning operation, a welding operation, a resurfacing operation, a coating application operation, etc. In some embodiments, the servicing or repair task type may be determined based on the part's component/area and/or the damage type. For example, a recoating task may be performed in response to the detection of coating lost. In another example, the material or method selected for filling the damaged area may be selected based on the specific component or component area.

In step 355, the servicing or repair operation is performed. In some embodiments, step 335 may be performed via the insertion tool or another tool for accessing the part inspected. In some embodiments, the subsequent task may be based on the nonplanar reference surface determined in step 320. For example, the repair operation may be configured to fill-in/restore the damaged area to match the nonplanar reference surface.

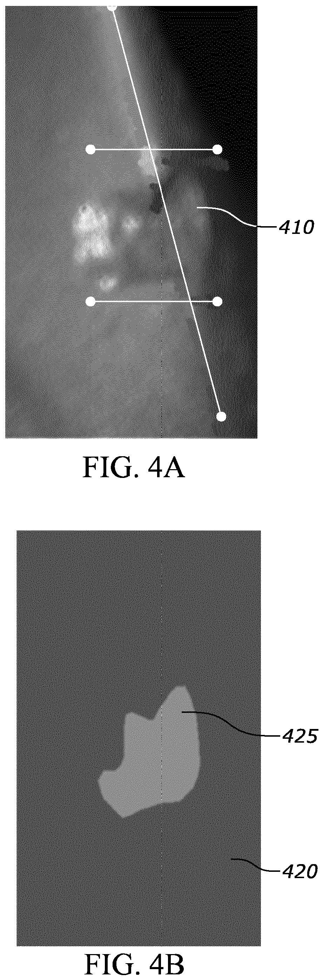

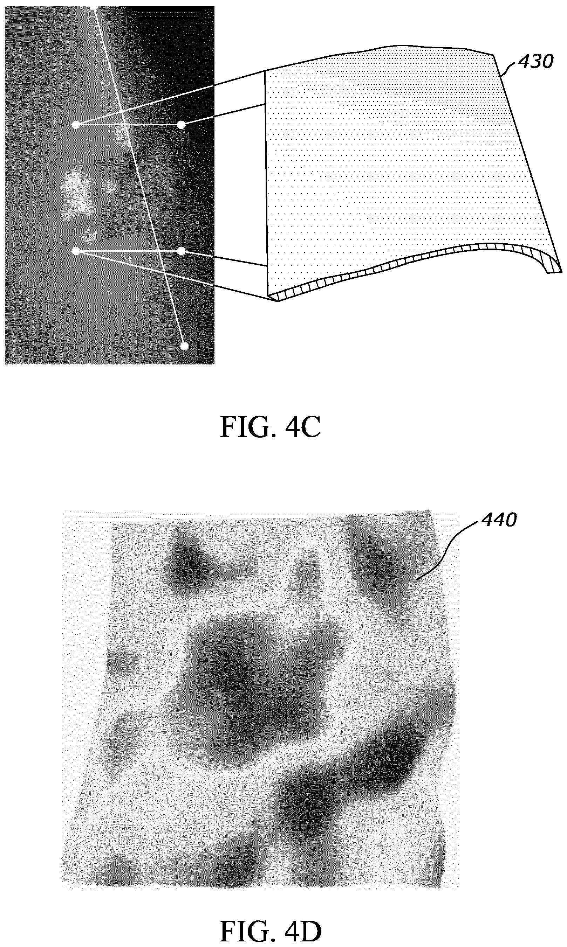

FIGS. 4A-D include illustrations of an example of reference surface determination. FIG. 4A shows a captured 3D surface model 410 of a part. FIG. 4B illustrates the segmentation of the 3D surface model 410 into a damaged area 425 and an undamaged area 420. In some embodiments, the segmentation may be performed according to step 315. In FIG. 4C, a nonplanar reference surface 430 is formed. In some embodiments, the nonplanar reference surface 430 may be formed according to step 320. In the example shown FIG. 4C, the nonplanar reference surface 430 is formed based on spline interpolation using lines and/or points in the undamaged areas 420 of the 3D surface model 410. While the damaged area 425 is generally shown as being a concaved surface, in some embodiments, at least a portion of the damaged area 425 may protrude above the nonplanar reference surface 430. FIG. 4D is an illustration of computed characteristics 440 based on the nonplanar reference surface 430 and the 3D surface model 410. In the example shown in FIG. 4D, the measured characteristics may be the distance between the 3D surface model 410 and the nonplanar reference surface 430, corresponding to the depth of the damaged area. In some embodiments, the damaged area 425 segmentation in FIG. 4B may be preliminary. Characteristics of the damaged area such as width, length, and radius may be measured with higher precision after the reconstruction of the nonplanar reference surface 430.

Further aspects of the disclosure are provided by the subject matter of the following clauses:
A system for engine inspection including: a sensor configured to capture data from a part of an engine; memory including instructions; and a processor to execute the instructions to: form a three-dimensional (3D) surface model of the part of the engine based on signals received from the sensor; determine a nonplanar reference surface based on the 3D surface model of the part; and measure a characteristic of a damaged portion of the part of the engine based on the 3D surface model and the nonplanar reference surface.

The system of any proceeding clause, wherein the engine is an assembled gas turbine engine and the sensor is mounted on a borescope tool inserted into a cavity of the assembled gas turbine engine to capture the data from an interior of the engine.

The system of any proceeding clause, wherein the processor executes the instructions to: identify an engine component or an engine area in which the part of the engine is located.

The system of any proceeding clause, wherein the processor executes the instructions to determine capture parameters of the sensor based on the engine component or the engine area.

The system of any proceeding clause, wherein the processor executes the instructions to identify the engine component or the engine area based on a capture location of the sensor, machine vision feature recognition, artificial intelligence image recognition, and/or a computer model of the engine.

The system of any proceeding clause, wherein the 3D surface model is segmented into a damaged area from an undamaged area on the part of the engine; wherein the nonplanar reference surface is determined based on the undamaged area of the 3D surface model.

The system of any proceeding clause, wherein the damaged area is segmented by classifying a minimum radius of curvature limit for an undamaged surface and identifying an area with surfacing exceeding the minimum radius of curvature limits as the damaged area.

The system of any proceeding clause, wherein the damaged area is identified based on comparing color, reflectiveness, surface texture, or thermal property of areas of the part.

The system of any proceeding clause, wherein the nonplanar reference surface is determined based on fitting an idealized surface model over the undamaged area to interpolate the nonplanar reference surface over the damaged area.

The system of any proceeding clause, wherein the nonplanar reference surface is determined based on an objective function used to determine a sampled average surface estimation of an undamaged part from a plurality of similar parts.

The system of any proceeding clause, wherein: the part of the engine includes a portion of an airfoil of the engine, the plurality of similar parts includes other airfoils of the engine, and surface estimation is based on data from the plurality of similar parts captured with the sensor at a same location.

The system of any proceeding clause, wherein the nonplanar reference surface is determined based on performing polynomial interpolation, spline interpolation, bilinear interpolation, and/or bicubic interpolation over the 3D surface model.

The system of any proceeding clause, wherein the nonplanar reference surface is determined based on applying a series of interpolation methods to the 3D surface model until a fit threshold is met.

The system of any proceeding clause, wherein the nonplanar reference surface is determined based on fitting the 3D surface model to a plurality of candidate geometries associated with an engine component or an engine area associated with the part.

The system of any proceeding clause, wherein the processor is further configured to determine a location of the damaged portion.

The system of any proceeding clause, wherein the characteristics of the damaged portion include a defect depth, a defect size, a defect sharpness, a defect aspect ratio, a defect orientation relative to a component, a damaged portion volume, or a spatial relationship to another damaged area.

The system of any proceeding clause, wherein the processor is further configured to: identify a damage type associated with the damaged portion; and wherein the characteristics of the damaged portion are measured based on the damage type.

The system of any proceeding clause, wherein the processor is further configured to identify a subsequent task based on the characteristic of the damaged portion.

The system of any proceeding clause, wherein the subsequent task includes a reinspection task, and the system is configured to select a different sensor or a different capture setting of the sensor to perform the reinspection task based on the characteristic or a damage type of the damaged portion.

A method for engine inspection including: capturing, with a sensor, data from a part of an engine; forming, by a processor executing instructions, a three-dimensional (3D) surface model of the part of the engine based on signals received from the sensor; determining, with the processor, a nonplanar reference surface based on the 3D surface model of the part; and measuring, with the processor, a characteristic of a damaged portion of the part of the engine based on the 3D surface model and the nonplanar reference surface.

An system for device inspection including: a sensor system including a sensor configured to capture data from a part of a device; and a processor receiving data from the sensor, the processor being configured to: form a three-dimensional (3D) surface model of the part of the device based on signals received from the sensor system; determine a nonplanar reference surface based on the 3D surface model of the part; and measure a characteristic of a damaged portion of the part of the device based on the 3D surface model and the nonplanar reference surface.

The system of any preceding clause, wherein the sensor includes a stereo-optical sensor, a structured light projection scanner, a laser scanner, a touch probe, an Eddy current imager, a scanning electron microscope (SEM), or an ultrasound imager.

The system of any preceding clause, wherein the device includes an assembled gas turbine engine, and the sensor is mounted on a borescope tool inserted into a cavity of the assembled gas turbine engine to capture the data from an interior of the assembled gas turbine engine.

The system of any preceding clause, wherein the processor is further configured to: identify a device component or a device area in which the part of the device is located.

The system of any preceding clause, wherein the sensor system includes sensors of different types, and wherein the processor is further configured to select the sensor from among sensors the sensor system to capture data from the part based on the device component or the device area.

The system of any preceding clause, wherein the processor is further configured to determine capture parameters of the sensor based on the device component or the device area.

The system of any preceding clause, wherein the processor is further configured to measure the characteristic of the damaged portion based on the device component or the device area.

The system of any preceding clause, wherein the device component or the device area is identified based on a capture location of the sensor, machine vision feature recognition, artificial intelligence image recognition, and/or a computer-model of the device.

The system of any preceding clause, wherein the device component or the device area is identified based on an image capture device different from the sensor.

The system of any preceding clause, wherein the device area includes a zone of a component, wherein the zone includes a leading edge, a trailing edge, a tip, a root fillet, a platform, a suction side, a pressure side, or a component area identifier.

The system of any preceding clause, wherein the 3D surface model is segmented into a damaged area from an undamaged area on the part of the device; wherein the nonplanar reference surface is determined based on the undamaged area of the 3D surface model.

The system of any preceding clause, wherein the damaged area is segmented based on the 3D surface model and/or another image captured by a different sensor of the sensor system.

The system of any preceding clause, wherein the damaged area is segmented based on an image-based computer vision identification.

The system of any preceding clause, wherein the damaged area is segmented by classifying a minimum radius of curvature limit for an undamaged surface and identifying an area with surfacing exceeding the minimum radius of curvature limits as the damaged area.

The system of any preceding clause, wherein the damaged area is identified based on comparing color, reflectiveness, surface texture, or thermal property of areas of the part.

The system of any preceding clause, wherein the damaged area is identified based on comparing the 3D surface model with a computer-aided design (CAD) model of the part or a previously captured surface model of the part.

The system of any preceding clause, wherein the nonplanar reference surface is determined based on fitting an idealized surface model over the undamaged area to interpolate the nonplanar reference surface over the damaged area.

The system of any preceding clause, wherein the nonplanar reference surface is determined based on an objective function used to determine a sampled average surface estimation of an undamaged part from a plurality of similar parts.

The system of any preceding clause, wherein: the part of the device includes a portion of an airfoil, the plurality of similar parts includes other airfoils of the device, and surface estimation is based on data from the plurality of similar parts captured with the sensor at a same location.

The system of any preceding clause, wherein the measurement data from the plurality of similar parts and the data from the sensor are captured while a component on which the airfoils are mounted is rotating.

The system of any preceding clause, wherein the nonplanar reference surface is determined based on performing polynomial interpolation, spline interpolation, bilinear interpolation, and/or bicubic interpolation over the 3D surface model.

The system of any preceding clause, wherein the nonplanar reference surface is determined based on applying a series of interpolation methods to the 3D surface model until a fit threshold is met.

The system of any preceding clause, wherein the nonplanar reference surface is determined based on fitting the 3D surface model to a plurality of candidate geometries associated with a device component or a device area associated with the part.

The system of any preceding clause, wherein the processor is further configured to determine a location of the damaged portion.

The system of any preceding clause, wherein the location of the damaged portion includes a distance to a device feature, wherein the device feature includes a cooling hole, a root fillet, a tip, an airfoil leading edge, an airfoil trailing edge, a proportion of an airfoil chord, or a platform.

The system of any preceding clause, wherein the location of the damaged portion is determined based on the 3D surface model or data captured by a different sensor of the sensor system.

The system of any preceding clause, wherein the characteristics of the damaged portion include a defect depth, a defect size, a defect sharpness, a defect aspect ratio, a defect orientation relative to a component, a damaged portion volume, or a spatial relationship to another damaged area.

The system of any preceding clause, wherein the processor is further configured to identify a damage type based on the characteristic of the damaged portion and a component or a device region associated with the part of the device.

The system of any preceding clause, wherein the processor is further configured to: identify a damage type associated with the damaged portion; and cause the sensor system to capture the data based on the damage type.

The system of any preceding clause, wherein the processor is further configured to: identify a damage type associated with the damaged portion; and measure the characteristics based on the damage type.

The system of any preceding clause, wherein the damage type includes a crack, a dent, a tear, an abrasion, an erosion, a bend, a creep, a thermal fatigue, a spallation, a nick, a gas corrosion, an oxidation, a fretting, and/or a pitting.

The system of any preceding clause, wherein the damage type is further determined based on a color image, a hyperspectral image, a thermal image, a radiology image, and/or a device history.

The system of any preceding clause, wherein the processor is further configured to identify a subsequent task based on the characteristic of the damaged portion.

The system of any preceding clause, wherein the subsequent task is determined based on: determining a threshold value based on a component associated with the damaged portion, a location of the damaged portion, a damage type, and/or device usage information; and comparing the characteristic with the threshold value.

The system of any preceding clause, wherein the subsequent task includes a repair task, a service task, or a replacement task.

The system of any preceding clause, wherein the subsequent task includes a reinspection task, and the system is configured to select a different sensor or a different capture setting of the sensor to perform the reinspection task based on the characteristic or a damage type of the damaged portion.

The system of any preceding clause, wherein the processor is further configured to store the 3D surface model and/or the nonplanar reference surface in a reference database for future inspections.

A method for device inspection including: capturing, with a sensor system, data from a part of a device; forming, with a processor, a three-dimensional (3D) surface model of the part of the device based on signals received from the sensor system; determining, with the processor, a nonplanar reference surface based on the 3D surface model of the part; and measuring, with the processor, a characteristic of a damaged portion of the part of the device based on the 3D surface model and the nonplanar reference surface.

The method of any preceding clause, wherein the sensor includes a stereo-optical sensor, a structured light projection scanner, a laser scanner, a touch probe, an Eddy current imager, a scanning electron microscope (SEM), or an ultrasound imager.

The method of any preceding clause, wherein the device is an assembled gas turbine engine and the sensor is mounted on a borescope tool inserted into a cavity of the assembled gas turbine engine to capture the data from an interior of the gas turbine engine.

The method of any preceding clause, further includes: identifying a device component or a device area in which the part of the device is located.

The method of any preceding clause, further includes: selecting the sensor from among a plurality of types of sensors of the sensor system to capture data from the part based on the device component or the device area.

The method of any preceding clause, further includes: determining capture parameters of the sensor based on the device component or the device area.

The method of any preceding clause, wherein the characteristic of the damaged portion is measured based on the device component or the device area.

The method of any preceding clause, wherein the device component or the device area is identified based on a capture location of the sensor, machine vision feature recognition, artificial intelligence image recognition, and/or a computer-model of the device.

The method of any preceding clause, wherein the device component or the device area is identified based on an image capture device different from the sensor.

The method of any preceding clause, wherein the device area includes a zone of a component, wherein the zone includes a leading edge, a trailing edge, a tip, a root fillet, a platform, a suction side, a pressure side, or a component area identifier.

The method of any preceding clause, wherein the 3D surface model is segmented into a damaged area from an undamaged area on the part of the device; wherein the nonplanar reference surface is determined based on the undamaged area of the 3D surface model.

The method of any preceding clause, wherein the damaged area is segmented based on the 3D surface model and/or another image captured by a different sensor of the sensor method.

The method of any preceding clause, wherein the damaged area is segmented based on an image-based computer vision identification.

The method of any preceding clause, wherein the damaged area is segmented by classifying a minimum radius of curvature limit for an undamaged surface and identifying an area with surfacing exceeding the minimum radius of curvature limits as the damaged area.

The method of any preceding clause, wherein the damaged area is identified based on comparing color, reflectiveness, surface texture, or thermal property of areas of the part.

The method of any preceding clause, wherein the damaged area is identified based on comparing the 3D surface model with a computer-aided design (CAD) model of the part or a previously captured surface model of the part.

The method of any preceding clause, wherein the nonplanar reference surface is determined based on fitting an idealized surface model over the undamaged area to interpolate the nonplanar reference surface over the damaged area.

The method of any preceding clause, wherein the nonplanar reference surface is determined based on an objective function used to determine a sampled average surface estimation of an undamaged part from a plurality of similar parts.

The method of any preceding clause, wherein: the part of the device includes a portion of an airfoil, the plurality of similar parts includes other airfoils of the device, and surface estimation is based on data from the plurality of similar parts captured with the sensor at a same location.

The method of any preceding clause, wherein the measurement data from the plurality of similar parts and the data from the sensor are captured while a component on which the airfoils are mounted is rotating.

The method of any preceding clause, wherein the nonplanar reference surface is determined based on performing polynomial interpolation, spline interpolation, bilinear interpolation, and/or bicubic interpolation over the 3D surface model.

The method of any preceding clause, wherein the nonplanar reference surface is determined based on applying a series of interpolation methods to the 3D surface model until a fit threshold is met.

The method of any preceding clause, wherein the nonplanar reference surface is determined based on fitting the 3D surface model to a plurality of candidate geometries associated with a device component or a device area associated with the part.

The method of any preceding clause, wherein the processor is further configured to determine a location of the damaged portion.

The method of any preceding clause, wherein the location of the damaged portion includes a distance to a device feature, wherein the device feature includes a cooling hole, a root fillet, a tip, an airfoil leading edge, an airfoil trailing edge, a proportion of an airfoil chord, or a platform.

The method of any preceding clause, wherein the location of the damaged portion is determined based on the 3D surface model or data captured by a different sensor of the sensor method.

The method of any preceding clause, wherein the characteristics of the damaged portion include a defect depth, a defect size, a defect sharpness, a defect aspect ratio, a defect orientation relative to a component, a damaged portion volume, or a spatial relationship to another damaged area.

The method of any preceding clause, wherein the processor is further configured to identify a damage type based on the characteristic of the damaged portion and a component or a device region associated with the part of the device.

The method of any preceding clause, wherein the processor is further configured to: identify a damage type associated with the damaged portion; and cause the sensor method to capture the data based on the damage type.

The method of any preceding clause, wherein the processor is further configured to: identify a damage type associated with the damaged portion; and measure the characteristics based on the damage type.

The method of any preceding clause, wherein the damage type includes a crack, a dent, a tear, an abrasion, an erosion, a bend, a creep, a thermal fatigue, a spallation, a nick, a gas corrosion, an oxidation, a fretting, and/or a pitting.

The method of any preceding clause, wherein the damage type is further determined based on a color image, a hyperspectral image, a thermal image, a radiology image, and/or a device history.

The method of any preceding clause, wherein the processor is further configured to identify a subsequent task based on the characteristic of the damaged portion.

The method of any preceding clause, wherein the subsequent task is determined based on: determining a threshold value based on a component associated with the damaged portion, a location of the damaged portion, a damage type, and/or device usage information; and comparing the characteristic with the threshold value.

The method of any preceding clause, wherein the subsequent task includes a repair task, a service task, or a replacement task.

The method of any preceding clause, wherein the subsequent task includes a reinspection task, and the system is configured to select a different sensor or a different capture setting of the sensor to perform the reinspection task based on the characteristic or a damage type of the damaged portion.

The method of any preceding clause, wherein the processor is further configured to store the 3D surface model and/or the nonplanar reference surface in a reference database for future inspections.

A system for engine inspection including: a sensor system including a sensor configured to capture data from a part of an engine; and a processor receiving data from the sensor, the processor being configured to: form a three-dimensional (3D) surface model of the part of the engine based on signals received from the sensor system; determine a nonplanar reference surface based on the 3D surface model of the part; and measure a characteristic of a damaged portion of the part of the engine based on the 3D surface model and the nonplanar reference surface.

The system of any preceding clause, wherein the sensor includes a stereo-optical sensor, a structured light projection scanner, a laser scanner, a touch probe, an Eddy current imager, a scanning electron microscope (SEM), or an ultrasound imager.

The system of any preceding clause, wherein the engine is an assembled gas turbine engine and the sensor is mounted on a borescope tool inserted into a cavity of the assembled gas turbine engine to capture the data from an interior of the engine.

The system of any preceding clause, wherein the processor is further configured to: identify an engine component or an engine area in which the part of the engine is located.

The system of any preceding clause, wherein the sensor system includes sensors of different types, and wherein the processor is further configured to select the sensor from among sensors the sensor system to capture data from the part based on the engine component or the engine area.

The system of any preceding clause, wherein the processor is further configured to determine capture parameters of the sensor based on the engine component or the engine area.

The system of any preceding clause, wherein the processor is further configured to measure the characteristic of the damaged portion based on the engine component or the engine area.

The system of any preceding clause, wherein the engine component or the engine area is identified based on a capture location of the sensor, machine vision feature recognition, artificial intelligence image recognition, and/or a computer model of the engine.

The system of any preceding clause, wherein the engine component or the engine area is identified based on an image capture device different from the sensor.

The system of any preceding clause, wherein the engine area includes a zone of a component, wherein the zone includes a leading edge, a trailing edge, a tip, a root fillet, a platform, a suction side, a pressure side, or a component area identifier.

The system of any preceding clause, wherein the 3D surface model is segmented into a damaged area from an undamaged area on the part of the engine; wherein the nonplanar reference surface is determined based on the undamaged area of the 3D surface model.

The system of any preceding clause, wherein the damaged area is segmented based on the 3D surface model and/or another image captured by a different sensor of the sensor system.

The system of any preceding clause, wherein the damaged area is segmented based on an image-based computer vision identification.

The system of any preceding clause, wherein the damaged area is segmented by classifying a minimum radius of curvature limit for an undamaged surface and identifying an area with surfacing exceeding the minimum radius of curvature limits as the damaged area.

The system of any preceding clause, wherein the damaged area is identified based on comparing color, reflectiveness, surface texture, or thermal property of areas of the part.

The system of any preceding clause, wherein the damaged area is identified based on comparing the 3D surface model with a computer-aided design (CAD) model of the part or a previously captured surface model of the part.

The system of any preceding clause, wherein the nonplanar reference surface is determined based on fitting an idealized surface model over the undamaged area to interpolate the nonplanar reference surface over the damaged area.

The system of any preceding clause, wherein the nonplanar reference surface is determined based on an objective function used to determine a sampled average surface estimation of an undamaged part from a plurality of similar parts .

The system of any preceding clause, wherein: the part of the engine includes a portion of an airfoil of the engine, the plurality of similar parts includes other airfoils of the engine, and surface estimation is based on data from the plurality of similar parts captured with the sensor at a same location.

The system of any preceding clause, wherein the measurement data from the plurality of similar parts and the data from the sensor are captured while a component on which the airfoils are mounted is rotating.

The system of any preceding clause, wherein the nonplanar reference surface is determined based on performing polynomial interpolation, spline interpolation, bilinear interpolation, and/or bicubic interpolation over the 3D surface model.

The system of any preceding clause, wherein the nonplanar reference surface is determined based on applying a series of interpolation methods to the 3D surface model until a fit threshold is met.

The system of any preceding clause, wherein the nonplanar reference surface is determined based on fitting the 3D surface model to a plurality of candidate geometries associated with an engine component or an engine area associated with the part.

The system of any preceding clause, wherein the processor is further configured to determine a location of the damaged portion.

The system of any preceding clause, wherein the location of the damaged portion includes a distance to an engine feature, wherein the engine feature includes a cooling hole, a root fillet, a tip, an airfoil leading edge, an airfoil trailing edge, a proportion of an airfoil chord, or a platform.

The system of any preceding clause, wherein the location of the damaged portion is determined based on the 3D surface model or data captured by a different sensor of the sensor system.

The system of any preceding clause, wherein the characteristics of the damaged portion include a defect depth, a defect size, a defect sharpness, a defect aspect ratio, a defect orientation relative to a component, a damaged portion volume, or a spatial relationship to another damaged area.

The system of any preceding clause, wherein the processor is further configured to identify a damage type based on the characteristic of the damaged portion and a component or an engine region associated with the part of the engine.

The system of any preceding clause, wherein the processor is further configured to: identify a damage type associated with the damaged portion; and determine the nonplanar reference surface based on the damage type.

The system of any preceding clause, wherein the processor is further configured to: identify a damage type associated with the damaged portion; and measure the characteristics based on the damage type.

The system of any preceding clause, wherein the damage type includes a crack, a dent, a tear, an abrasion, an erosion, a bend, a creep, a thermal fatigue, a spallation, a nick, a gas corrosion, an oxidation, a fretting, and/or a pitting.

The system of any preceding clause, wherein the damage type is further determined based on a color image, a hyperspectral image, a thermal image, a radiology image, and/or an engine history.

The system of any preceding clause, wherein the processor is further configured to identify a subsequent task based on the characteristic of the damaged portion.

The system of any preceding clause, wherein the subsequent task is determined based on: determining a threshold value based on a component associated with the damaged portion, a location of the damaged portion, a damage type, and/or engine usage information; and comparing the characteristic with the threshold value.

The system of any preceding clause, wherein the subsequent task includes a repair task, a service task, or a replacement task.

The system of any preceding clause, wherein the subsequent task includes a reinspection task, and the system is configured to select a different sensor or a different capture setting of the sensor to perform the reinspection task based on the characteristic or a damage type of the damaged portion.

The system of any preceding clause, wherein the processor is further configured to store the 3D surface model and/or the nonplanar reference surface in a reference database for future inspections.

A method for engine inspection including: capturing, with a sensor system, data from a part of an engine; forming, with a processor, a three-dimensional (3D) surface model of the part of the engine based on signals received from the sensor system; determining, with the processor, a nonplanar reference surface based on the 3D surface model of the part; and measuring, with the processor, a characteristic of a damaged portion of the part of the engine based on the 3D surface model and the nonplanar reference surface.

The method of any preceding clause, wherein the sensor includes a stereo-optical sensor, a structured light projection scanner, a laser scanner, a touch probe, an Eddy current imager, a scanning electron microscope (SEM), or an ultrasound imager.

The method of any preceding clause, wherein the engine is an assembled gas turbine engine and the sensor is mounted on a borescope tool inserted into a cavity of the assembled gas turbine engine to capture the data from an interior of the engine.

The method of any preceding clause, further includes: identifying an engine component or an engine area in which the part of the engine is located.

The method of any preceding clause, further includes: selecting the sensor from among a plurality of types of sensors of the sensor system to capture data from the part based on the engine component or the engine area.

The method of any preceding clause, further includes: determining capture parameters of the sensor based on the engine component or the engine area.

The method of any preceding clause, wherein the characteristic of the damaged portion is measured based on the engine component or the engine area.

The method of any preceding clause, wherein the engine component or the engine area is identified based on a capture location of the sensor, machine vision feature recognition, artificial intelligence image recognition, and/or a computer-model of the engine.

The method of any preceding clause, wherein the engine component or the engine area is identified based on an image capture device different from the sensor.

The method of any preceding clause, wherein the engine area includes a zone of a component, wherein the zone includes a leading edge, a trailing edge, a tip, a root fillet, a platform, a suction side, a pressure side, or a component area identifier.

The method of any preceding clause, wherein the 3D surface model is segmented into a damaged area from an undamaged area on the part of the engine; wherein the nonplanar reference surface is determined based on the undamaged area of the 3D surface model.

The method of any preceding clause, wherein the damaged area is segmented based on the 3D surface model and/or another image captured by a different sensor of the sensor system.

The method of any preceding clause, wherein the damaged area is segmented based on an image-based computer vision identification.

The method of any preceding clause, wherein the damaged area is segmented by classifying a minimum radius of curvature limit for an undamaged surface and identifying an area with surfacing exceeding the minimum radius of curvature limits as the damaged area.

The method of any preceding clause, wherein the damaged area is identified based on comparing color, reflectiveness, surface texture, or thermal property of areas of the part.

The method of any preceding clause, wherein the damaged area is identified based on comparing the 3D surface model with a computer-aided design (CAD) model of the part or a previously captured surface model of the part.

The method of any preceding clause, wherein the nonplanar reference surface is determined based on fitting an idealized surface model over the undamaged area to interpolate the nonplanar reference surface over the damaged area.

The method of any preceding clause, wherein the nonplanar reference surface is determined based on an objective function used to determine a sampled average surface estimation of an undamaged part from a plurality of similar parts .

The method of any preceding clause, wherein: part of the engine includes a portion of an airfoil of the engine, the plurality of similar parts includes other airfoils of the engine, and surface estimation is based on data from the plurality of similar parts captured with the sensor at a same location.

The method of any preceding clause, wherein the measurement data from the plurality of similar parts and the data from the sensor are captured while a component on which the airfoils are mounted is rotating.

The method of any preceding clause, wherein the nonplanar reference surface is determined based on performing polynomial interpolation, spline interpolation, bilinear interpolation, and/or bicubic interpolation over the 3D surface model.

The method of any preceding clause, wherein the nonplanar reference surface is determined based on applying a series of interpolation methods to the 3D surface model until a fit threshold is met.

The method of any preceding clause, wherein the nonplanar reference surface is determined based on fitting the 3D surface model to a plurality of candidate geometries associated with an engine component or an engine area associated with the part.

The method of any preceding clause, wherein the processor is further configured to determine a location of the damaged portion.

The method of any preceding clause, wherein the location of the damaged portion includes a distance to an engine feature, wherein the engine feature includes a cooling hole, a root fillet, a tip, an airfoil leading edge, an airfoil trailing edge, a proportion of an airfoil chord, or a platform.

The method of any preceding clause, wherein the location of the damaged portion is determined based on the 3D surface model or data captured by a different sensor of the sensor system.

The method of any preceding clause, wherein the characteristics of the damaged portion include a defect depth, a defect size, a defect sharpness, a defect aspect ratio, a defect orientation relative to a component, a damaged portion volume, or a spatial relationship to another damaged area.

The method of any preceding clause, wherein the processor is further configured to identify a damage type based on the characteristic of the damaged portion and a component or an engine region associated with the part of the engine.

The method of any preceding clause, wherein the processor is further configured to: identify a damage type associated with the damaged portion; and determine the nonplanar reference surface based on the damage type.

The method of any preceding clause, wherein the processor is further configured to: identify a damage type associated with the damaged portion; and measure the characteristics based on the damage type.

The method of any preceding clause, wherein the damage type includes a crack, a dent, a tear, an abrasion, an erosion, a bend, a creep, a thermal fatigue, a spallation, a nick, a gas corrosion, an oxidation, a fretting, and/or a pitting.

The method of any preceding clause, wherein the damage type is further determined based on a color image, a hyperspectral image, a thermal image, a radiology image, and/or an engine history.

The method of any preceding clause, wherein the processor is further configured to identify a subsequent task based on the characteristic of the damaged portion.

The method of any preceding clause, wherein the subsequent task is determined based on: determining a threshold value based on a component associated with the damaged portion, a location of the damaged portion, a damage type, and/or engine usage information; and comparing the characteristic with the threshold value.

The method of any preceding clause, wherein the subsequent task includes a repair task, a service task, or a replacement task.

The method of any preceding clause, wherein the subsequent task includes a reinspection task, and the processor is configured to select a different sensor or a different capture setting of the sensor to perform the reinspection task based on the characteristic or a damage type of the damaged portion.

The method of any preceding clause, wherein the processor is further configured to store the 3D surface model and/or the nonplanar reference surface in a reference database for future inspections.

The method of any preceding clause, wherein the device component or the device area is identified based on a capture location of the sensor, machine vision feature recognition, artificial intelligence image recognition, and/or a computer model of the device.

The system of any preceding clause, wherein the light projection is a line.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A system for engine inspection comprising:
a sensor (235) configured to capture data from a part of an engine (10);
memory including instructions; and
a processor (212) to execute the instructions to:
form a three-dimensional (3D) surface model of the part of the engine (10) based on signals received from the sensor (235);
determine a nonplanar reference surface (430) based on the 3D surface model of the part; and
measure a characteristic of a damaged portion of the part of the engine (10) based on the 3D surface model and the nonplanar reference surface (430).

2. The system of claim 1, wherein the engine (10) is an assembled gas turbine engine (10) and the sensor (235) is mounted on a borescope tool inserted into a cavity of the assembled gas turbine engine (10) to capture the data from an interior of the engine (10).

3. The system of claim 1 or 2, wherein the processor (212) executes the instructions to:
identify an engine (10) component or an engine (10) area in which the part of the engine (10) is located.

4. The system of claim 3, wherein the processor (212) executes the instructions to determine capture parameters of the sensor (235) based on the engine (10) component or the engine (10) area.

5. The system of claim 3 or 4, wherein the processor (212) executes the instructions to identify the engine (10) component or the engine (10) area based on a capture location of the sensor (235), machine vision feature recognition, artificial intelligence image recognition, and/or a computer model of the engine (10).

6. The system of any preceding claim, wherein the 3D surface model is segmented into a damaged area (425) from an undamaged area (420) on the part of the engine (10);
wherein the nonplanar reference surface (430) is determined based on the undamaged area (420) of the 3D surface model.

7. The system of claim 6, wherein the damaged area (425) is segmented by classifying a minimum radius of curvature limit for an undamaged surface and identifying an area with surfacing exceeding the minimum radius of curvature limits as the damaged area (425).

8. The system of claim 6 or 7, wherein the damaged area (425) is identified based on comparing color, reflectiveness, surface texture, or thermal property of areas of the part.

9. The system of any of claims 6 to 8, wherein the nonplanar reference surface (430) is determined based on fitting an idealized surface model over the undamaged area (420) to interpolate the nonplanar reference surface (430) over the damaged area (425).

10. The system of any preceding claim, wherein the nonplanar reference surface (430) is determined based on an objective function used to determine a sampled average surface estimation of an undamaged part from a plurality of similar parts.

11. The system of claim 10, wherein:
the part of the engine (10) comprises a portion of an airfoil of the engine (10),
the plurality of similar parts comprises other airfoils of the engine (10), and
surface estimation is based on data from the plurality of similar parts captured with the sensor (235) at a same location.

12. The system of any preceding claim, wherein the nonplanar reference surface (430) is determined based on performing polynomial interpolation, spline interpolation, bilinear interpolation, and/or bicubic interpolation over the 3D surface model.

13. The system of any preceding claim, wherein the nonplanar reference surface (430) is determined based on applying a series of interpolation methods to the 3D surface model until a fit threshold is met.

14. The system of any preceding claim, wherein the nonplanar reference surface (430) is determined based on fitting the 3D surface model to a plurality of candidate geometries associated with an engine (10) component or an engine (10) area associated with the part.

15. A method for engine inspection comprising:
capturing, with a sensor (235), data from a part of an engine (10);
forming, by a processor (212) executing instructions, a three-dimensional (3D) surface model of the part of the engine (10) based on signals received from the sensor (235);
determining, with the processor (212), a nonplanar reference surface (430) based on the 3D surface model of the part; and
measuring, with the processor (212), a characteristic of a damaged portion of the part of the engine (10) based on the 3D surface model and the nonplanar reference surface (430).
